# EUROPÄISCHE PATENTSCHRIFT

(11) **EP 2 267 039 B1**
(45) Veröffentlichungstag und Bekanntmachung des Hinweises auf die Patenterteilung: **19.09.2012**
(21) Anmeldenummer: 09008430.2
(22) Anmeldetag: 27.06.2009
(51) Int. Cl.: C08F 2/24, C08F 220/20

(54) **Copolymerisierbare Tenside**
Copolymerised tensides
Tensioactif copolymérisable

(43) Veröffentlichungstag der Anmeldung: 29.12.2010
(73) Patentinhaber: Cognis IP Management GmbH, 40589 Düsseldorf (DE)
(72) Erfinder: Held, Uwe, 42553 Velbert (DE); Mausberg, Thomas, 42781 Haan (DE); Hömberg, Katharina, 40723 Hilden (DE); Schliwka, Thomas, 51427 Bergisch Gladbach (DE); Klagge, Ronald, 40699 Erkrath (DE)

(56) Entgegenhaltungen:
- EP-A1- 1 512 703
- DE-A1- 19 831 706

## Beschreibung

### Gebiet der Erfindung

Die Erfindung liegt auf dem Polymersektor und betrifft die Verwendung von Maleinsäure-Estern spezieller Struktur als Emulgatoren in der Emulsionspolymerisation sowie ein Verfahren zur Herstellung von Polymeren durch Emulsionspolymerisation unter Verwendung spezieller copolymerisierbarer Emulgatoren.

### Stand der Technik

Bei der Emulsionspolymerisation handelt es sich um ein spezielles Verfahren der Polymerisation, bei dem gering wasserlösliche olefinisch ungesättigte Monomere mit Hilfe von Emulgatoren in Wasser emulgiert und unter Verwendung wasserlöslicher Initiatoren wie beispielsweise Kaliumperoxodisulfat oder Redoxinitiatoren polymerisiert werden. Anionische und/oder nicht-ionische Tenside sind hierbei die wesentliche Bestandteile. Über den Micellaufbau in der wässrigen Lösung gewährleisten sie den Prozess der Emulsionspolymerisation.

Copolymerisierbare Emulgatoren sind in der Industrie sehr gefragt, da sie in die wachsende Polymerkette vollständig oder teilweise eingebaut werden und dadurch beispielsweise die Migration freier Emulgatormoleküle im Endanwendungsprodukt herabsetzen. Copolymerisierbare Emulgatoren nehmen eine Mittelstellung zwischen Monomeren und herkömmlichen Emulgatoren ein. Hierbei müssen sie in Bezug auf ihre Reaktivität auf das verwendete Monomersystem abgestimmt sein und dürfen die Eigenschaften des entstehenden Polymers nicht negativ verändern. Gleichzeitig dürfen sie durch das Vorhandensein einer reaktiven Gruppe ihre emulgativen Eigenschaften nicht verlieren. Aufgrund dieser Kombination spezieller. Eigenschaften besteht seitens der Industrie eine große Nachfrage an neuen copolymerisierberen Emulgatoren.

Die deutsche Offenlegungsschrift DE-A-10340081 beschreibt copolymerisierbare Tenside der Formel HOOC-CH=CH-COO-(BO)_{z}(PO)_{y}(EO)ₓR¹, in der R¹ für einen Alkylrest oder Alkylphenolrest mit 8 bis 24 Kohlenstoffatomen, BO für eine Butylenoxideinheit, PO für eine Propylenoxideinheit und EO für eine Ethylenoxideinheit steht und die Zahlen x, y und z unabhängig voneinander für 0 oder Zahlen von 1 bis 50 stehen, mit der Maßgabe, dass mindestens eine der Zahlen x, y und z von 0 verschieden ist, wobei die Carboxylgruppe teilweise oder ganz in neutralisierter Form vorliegen kann und die C=C-Doppelbindung cis- oder trans-konfiguriert sein kann.

Schoonbrood et al. beschreiben in Macromolecules 1997 (30), 6024-6033 in Tabelle 1 (Seite 6025 oben) ein anionisches Tensid "M14" für den Einsatz als Emulgator in der Emulsionspolymerisation mit der Formel NaO₄SC₃H₆OCOCH=CHCOOC₁₄H₂₉ - was auch in der Form NaO₃SO-C₃H₆O-COCH=CHCOOC₁₄H₂₉ geschrieben werden kann.

### Beschreibung der Erfindung

Der vorliegenden Erfindung lag die Aufgabe zugrunde, Verbindungen bereitzustellen, die sich allein oder in Abmischung mit anderen Verbindungen als copolymerisierbare Emulgatoren für die Emulsionspolymerisation eignen.

Bei der Verwendung als Emulgatoren für die Emulsionspolymerisation sollten diese insbesondere bewirken, dass nur eine geringe Koagulatbildung erfolgt. Weiterhin sollten diese copolymerisierbaren Emulgatoren in wässriger Angebotsform gießbar bzw. pumpbar sein.

Schließlich sollten durch die Verwendung als Emulgatoren bei der Emulsionspolymerisation Latices zugänglich sind, die gegenüber solchen Latices, die mit vergleichbaren nicht-copolymerisierbaren Emulgatoren hergestellt werden, verbesserte Eigenschaften in Bezug auf Elektrolytbeständigkeit, Alkaliresistenz und/oder Viskosität aufweisen.

Gegenstand der Erfindung ist zunächst die Verwendung von Maleinsäure-Estern, die ausgewählt sind aus Verbindungen der allgemeinen Formeln (I) und (II),
worin bedeuten:
- A einen Alkylrest mit 10-20 C-Atomen,
- X und Z unabhängig voneinander Wasserstoff- oder einen Methylrest,
- M Wasserstoff, ein Alkali- oder Erdalkalimetall, -NH₃ oder eine Amingruppe,
- n und p unabhängig voneinander eine Zahl im Bereich von 3 bis 10, 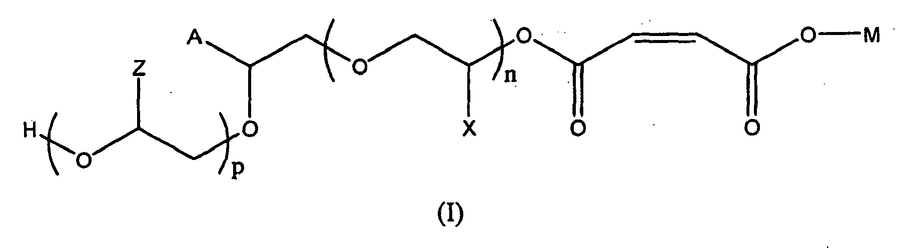 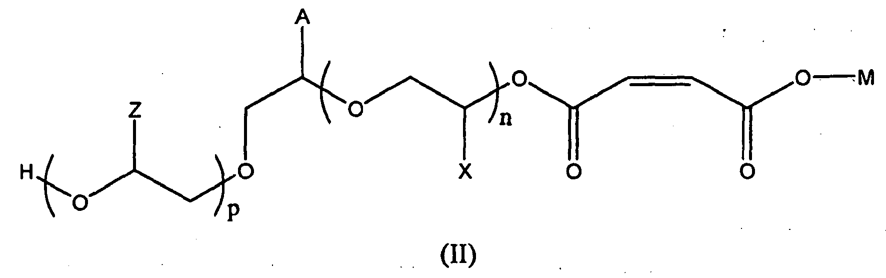 als copolymerisierbare Emulgatoren in der Emulsionspolymerisation olefinisch ungesättigter Monomerer. Dabei können im Zuge der Emulsionspolymeristion die Verbindungen (I) und (II) einzeln oder im Gemisch untereinander eingesetzt werden.

### EO- und/oder PO-Bausteine

Die Verbindungen (I) und (II) enthalten Strukturelemente 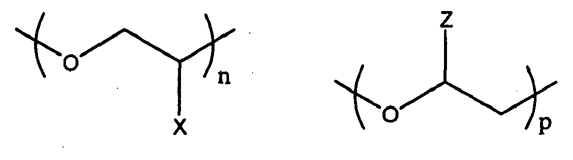 wobei - wie bereits gesagt - bedeuten:
- X und Z unabhängig voneinander Wasserstoff- oder einen Methylrest
- n und p unabhängig voneinander eine Zahl im Bereich von 3 bis 10.

Es sei festgestellt, dass die verwendete Formelschreibweise ausdrücken soll, dass sich die genannten Strukturelemente für den Fall von Ethylenoxid (EO) oder Propylenoxid (PO) ableiten, nämlich insofern, als sich - logischerweise für den Fall, dass die Indices m, n und p ungleich null sind - diese Bausteine synthetisch aus einer Addition von EO oder PO bzw. Ethylenglykol oder Propylenglykol (für n, p = 1) bzw. Polyaddition von EO und/oder PO bzw. Polyethylenglykol oder Polypropylenglykol oder entsprechenden gemischten EO-PO-Copolymeren (für n, p ≥ 2) resultieren.

Es sei ferner ausdrücklich festgestellt, dass jedes dieser Strukturelemente - unabhängig voneinander - sowohl ausschließlich aus EO- als auch ausschließlich aus PO-Bausteinen aufgebaut sein kann, als auch EO- und PO-Bausteine in gemischter Form, blockweise oder statistisch verteilt, enthalten kann. Daher stellt die verwendete formelmäßige Darstellung der genannten Strukturelemente eine abkürzende Schreibweise für die genannten Möglichkeiten dar, welche dem kundigen Fachmann selbstverständlich sind.

So bedeutet etwa X = H und n = 5, dass das entsprechende Strukturelement fünf miteinander verknüpfte EO-Einheiten enthält, was einer Gruppierung -(O-CH₂-CH₂-)₅- entspricht; dagegen bedeutet X = CH₃ und n = 5, dass das Strukturelement fünf miteinander verknüpfte PO-Einheiten enthält, was einer Gruppierung -(O-CH₂-CH(CH₃))₅- entspricht, wobei - wie dem Fachmann bekannt - die Orientierung der Methylgruppe innerhalb des Strukturelements für jeden PO-Baustein in zweierlei Weise realisiert sein kann, nämlich als - (O-CH₂-CH(CH₃))- oder -(O-CH(CH₃)-CH₂)-.

Die Formeln (I) und (II) sind im Rahmen der vorliegenden Erfindung so zu verstehen, dass EO- und PO-Bausteine auch innerhalb der genannten Strukturelemente gleichzeitig vorhanden sein können (was logischerweise voraussetzt, dass die Indizes dann jeweils mindestens die Zahl 2 bedeuten). Der Ausdruck "unabhängig voneinander" innerhalb des Terminus, dass "X und Z unabhängig voneinander Wasserstoff- oder einen Methylrest" bedeuten, bezieht sich also nicht nur auf die genannten unterschiedlichen Strukturelemente, sondern gilt auch innerhalb ein- und desselben Strukturelementes.

Nach dem Gesagten ist klar, dass etwa die Formel (I) sich in anderer Schreibweise als 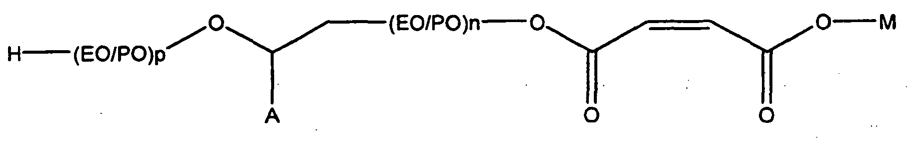 darstellen ließe, wobei die Strukturelemente -(EO/PO)ₚ- bzw. -(EO/PO)ₙ- wie ausgeführt ausschließlich EO- oder PO-Bausteine oder Mischungen beider Bausteine enthalten können und wobei jeder PO-Baustein in der Orientierung - (O-CH₂-CH(CH₃))- oder -(O-CH(CH₃)-CH₂)- vorliegen kann.

### Die Gruppe M

Wie ausgeführt kann M die Bedeutung haben: Wasserstoff, Alkali- oder Erdalkalimetall, -NH₃ oder eine Amingruppe.
Da M keine "isolierte" Gruppe ist, sondern Bestandteil der Gruppe -COOM, so ist dem Fachmann klar, dass je nach Bedeutung von M es sich bei der Gruppe -COOM entweder um eine freie Carboxylatgruppe (M = H ergibt die Gruppe -COOH) oder um deren Salzform (falls M ungleich Wasserstoff ist und eine der anderen Bedeutungen hat) handelt.
Die Gruppe -COOM kann in teilweise oder vollständig neutralisierter Form vorliegen. Die Neutralisation der Carboxylatgruppe -COOH kann beispielsweise mit Alkali- oder Erdalkalihydroxiden wie Natrium-, Kalium-, Calcium- oder Magnesiumhydroxid oder mit Aminen wie Ammoniak oder Ethanolaminen geschehen. Die Salzform der Verbindungen (I) und (II) zeichnet sich durch eine gute Wasserlöslichkeit aus.

### Zu den Verbindungen (I) und (II)

Bei dem Alkylrest A handelt es sich um lineare oder verzweigte, gesättigte oder ungesättigte Alkylgruppen mit 10 bis 20, besonders bevorzugt 12 bis 18 C-Atomen. Ganz besonders bevorzugt sind folgende Alkylreste A: Lauryl (C 12), Myristyl (C14), Cetyl (C16), Stearyl (C18), Oleyl (olefinisch ungesättigtes C 18) und iso-Tridecyl.

Die Verbindungen der Formel (I) sind beispielsweise dadurch zugänglich, dass man handelsübliche alpha-Olefine mittels Ameisensäure und Wasserstoffperoxid epoxidiert, den Epoxidring des erhaltenen Zwischenproduktes 1 anschließend mittels Wasser oder Ethylenglykol öffnet und das erhaltene Zwischenprodukt 2 gewünschtenfalls alkoxyliert (Umsetzung mit Ethylen- und/oder Propylenoxid). Das so erhaltene Diol wird dann mit Maleinsäureanhydrid umgesetzt, wobei ein Maleinsäure-Halbester entsteht, der gewünschtenfalls neutralisiert wird.

### Verwendung der Verbindungen (I) und (II)

Die erfindungsgemäß einzusetzenden Verbindungen (I) und (II) lassen sich leicht und vollständig zusammen mit anderen, davon verschiedenen olefinisch ungesättigten Monomeren polymerisieren, wobei sie die Bildung einer schaumfreien und homogenen Emulsion fördern.

### Verfahren zur Herstellung von Polymeren

Ein weiterer Gegenstand der Erfindung ist ein Verfahren zur Herstellung von Polymeren durch Emulsionspolymerisation olefinisch ungesättigter Monomere, bei dem man als copolymeriserbare Emulgatoren die oben genannten Verbindungen (I) und (II) einsetzt.

Das erfindungsgemäße Verfahren unter Einsatz der Verbindungen (I) und (II), insbesondere in Salzform, zeichnet sich dadurch aus, dass Polymere mit besonderer Scher- und Elektrolytbeständigkeit sowie niedrigem Koagulatgehalt erhalten werden.
In einer Ausführungsform der Erfindung werden Latices erhalten, die sich ihrerseits zusätzlich durch eine besondere Wasserresistenz sowie Stabilität gegenüber Temperaturschwankungen auszeichnen und bei denen keine Migration des Emulgators in den Film festzustellen ist.
Ein weiterer Vorteil des erfindungsgemäßen Verfahrens besteht ferner darin, dass es praktisch schaumfrei ist und die Bildung flüchtiger organischer Stoffe zuverlässig vermieden wird. Da die Emulgatoren (I) und (II) praktisch quantitativ in das Polymer eingebaut werden, sind mit deren Verwendung auch keine Probleme hinsichtlich der biologischen Abbaubarkeit verbunden. Die olefinisch ungesättigten Ester (I) und (II) zeigen des weiteren praktisch keine Tendenz zur Homopolymerisation.

Es wurde gefunden, dass durch die Verwendung der Verbindungen (I) und (II) als Emulgatoren bei der Emulsionspolymerisation Latices zugänglich sind, die gegenüber solchen Latices, die mit vergleichbaren nicht-copolymerisierbaren Emulgatoren hergestellt wurden, verbesserte Eigenschaften in Bezug auf ihre Elektrolytbeständigkeit, ihre Alkaliresistenz oder ihre Viskosität aufweisen. Auch Kombinationen von (I) und (II) mit typischen Tensiden nicht-ionischer und anionischer Natur sind einsatzfähig und zeigen ebenfalls ein positives Eigenschaftsprofil.

Die erfindungsgemäßen Latices können beispielsweise in der Beschichtungsindustrie eingesetzt werden. Es wurde gefunden, dass Beschichtungen, die mit den erfindungsgemäßen Latices hergestellt wurden, einen höheren Korrosionsschutz gegenüber herkömmlichen Beschichtungen besitzen.

Weiterhin wurde gefunden, dass insbesondere Latices, die unter Einsatz von Verbindungen der allgemeinen Formel (I) und (II) als Emulgatoren hergestellt wurden, gegenüber solchen Latices, die mit herkömmlichen Emulgatoren hergestellt wurden, eine verbesserte Gefrier-Tau-Stabilität aufweisen.

### Monomere

Die erfindungsgemäß einzusetzenden olefinisch ungesättigten Ester der allgemeinen Formel (I) und (II) eignen sich als Emulgatoren bei der Emulsionspolymerisation von nahezu sämtlichen technisch wichtigen, im wesentlichen wasserunlöslichen Monomeren, vorzugsweise aber (Meth)acryl-, Styrol- und Vinylverbindungen.

Typische Beispiele für diese Monomeren sind Vinylaromaten, z.B. Styrol, Divinylbenzol oder Vinyltoluol, polymerisierbare Olefine und Diolefine wie Propen, Butadien oder Isopren, Ester der Acryl- oder Methacrylsäure mit linearen oder verzweigten Alkoholen mit 1 bis 18 Kohlenstoffatomen, insbesondere von Alkoholen mit 1 bis 8 Kohlenstoffatomen und - besonders bevorzugt - von Methylestern, Ethylestern und Butylestern derselben, Vinylester von Säuren mit 2 bis 12 Kohlenstoffatomen, insbesondere Vinylacetat, Vinylpropionat, Vinyl-2-ethylhexanat und Vinyllaurat, Vinylalkylether mit 1 bis 8 Kohlenstoffatomen aufweisenden Alkylgruppen, Vinylchlorid, Vinylidenchlorid und dergleichen.

Monomere, die ausgewählt sind auf die Gruppe der Alkylacrylate, Styrolacrylate VeoVa-Verbindungen oder Mischungen hieraus, mit oder ohne Zusatz von Acrylsäure oder Methacrylsäure, sind im Rahmen der vorliegenden Erfindung besonders bevorzugt.

Die Monomeren können in Gegenwart der erfindungsgemäß einzusetzenden copolymerisierbaren Emulgatoren (I) und (II) homopolymerisiert oder mit anderen der genannten Verbindungen aus der vorstehenden Aufzählung copolymerisiert werden. Weiterhin können Copolymerisationen durchgeführt werden, bei denen bis zu 50 Gew.-% weitere, von den erfindungsgemäßen Verbindungen (I) und (II) verschiedene, an sich teilweise oder vollständig wasserlösliche Monomere beteiligt sind, zum Beispiel Acrylnitril, Methacrylnitril, Halbester der Malein- bzw. Fumarsäure mit 1 bis 8 Kohlenstoffatomen, Acrylsäure, Methacrylsäure, Maleinsäure, Fumarsäure, Crotonsäure und/oder Itaconsäure.

In einer Ausführungsform setzt man in dem erfindungsgemäßen Verfahren als Monomere Kombinationen von Styrol/Butylacrylat, Vinylacetat/Butylacrylat oder Styrol/Butadien ein.

### Co-Emulgatoren

Weiterhin ist es auch möglich, die erfindungsgemäß einzusetzenden Verbindungen (I) und (II) in Kombination mit bekannten nichtionischen und/oder anionischen Co-Emulgatoren einzusetzen. Dies kann zu Dispersionen mit erhöhter Stabilität, z.B. gegenüber Scherkräften, Temperatureinflüssen und Elektrolyten führen. Die Co-Emulgatoren werden dabei in Mengen von 0,5 bis 5, vorzugsweise 1 bis 3 Gew.-%, bezogen auf die Gesamtheit der eingesetzten Monomere, zugegeben. Dabei ist es möglich, die Co-Emulgatoren zu Beginn der Polymerisation zusammen mit den Emulgatoren vorzulegen oder sie im Verlauf der Polymerisation zuzudosieren. Eine weitere Variante sieht vor, eine Präemulsion unter Verwendung oder Mitverwendung der Co-Emulgatoren herzustellen und diese im Verlauf der Polymerisation zuzudosieren. Es ist auch möglich, zur Nachstabilisierung der unter Verwendung der erfindungsgemäßen Acrylsäure- und/oder Methacrylsäureester erhaltenen Dispersionen diese mit Co-Emulgatoren zu versetzen.

Die erfindungsgemäß einzusetzenden Verbindungen (I) und (II) können auch zusammen mit Schutzkolloiden eingesetzt werden. Typische Beispiele für derartige Schutzkolloide sind vollständig oder teilweise verseifte Homo- und/oder Copolymere des Vinylacetats, z.B. teilverseiftes Polyvinylacetat, oder vollständig verseifte Copolymere aus Vinylacetat und Vinylethern. Bevorzugte Copolymere weisen 1 bis 4 Kohlenstoffatome im Etherteil des Polyvinylethers auf. Weitere Schutzkolloide können von Polysacchariden abgeleitet sein. So sind insbesondere Cellusoseether wie Hydroxyethylcellulose, Hydroxypropylcellulose, Carboxymethylcellulose, Methylcellulose, Ethylcellulose oder Cellulose-Mischether geeignet. Weiterhin geeignet sind Polyacrylamid sowie dessen Copolymere mit Acrylsäure, Acrylnitril oder Acrylestern. Auch Kondensationsprodukte aus Naphthalinsulfonsäure und Formaldehyd oder andere wasserlösliche Formaldehydharze, insbesondere Harnstoff-Formaldehyd-Harze, können ver-wendet werden. Schließlich sind Casein, Gelatine, Gummi arabicum sowie natürliche Stärke und substituierte Stärkederivate wie Hydroxyethylstärke geeignete Schutzkolloide.

### Emulsionspolymerisation

In einer Ausführungsform setzt man die Emulgatoren (I) und (II) bei der Emulsionspolymerisation in Mengen von insgesamt 0,1 bis 25 Gew.-% - bezogen auf die Summe der Monomere - ein.

Die unter Verwendung der Verbindungen (I) und (II) im ersten Schritt des Verfahrens üblicherweise herzustellenden wäßrigen Dispersionen weisen in der Praxis 15 bis 75 Gew.-% polymerisierte Monomere (Trockenrückstand) in Wasser oder einem Gemisch von Wasser und wasserlöslichen organischen Lösemitteln auf. Bevorzugt ist der Bereich von 20 bis 60 Gew.-% Trockenrückstand; jedoch sind für spezielle Anwendungen auch wäßrige Dispersionen mit weniger als 15 Gew.-% Trockenrückstand herstellbar. Bei den vorgenannten Verfahren zur Emulsionspolymerisation können auch weitere übliche Polymerisationshilfsstoffe eingesetzt werden, insbesondere Initiatoren, z.B. anorganische Peroxidverbindungen wie Kalium- oder Ammoniumpersulfat oder Wasserstoffperoxid; weiterhin organische Peroxidverbindungen oder organische Azoverbindungen, soweit diese für die Emulsionspolymerisation verwendbar sind. Die Initiatoren werden in üblichen Mengen, d.h. von 0,05 bis 2 Gew.-%, vorzugsweise von 0,1 bis 0,5 Gew.-% eingesetzt. Weitere geeignete Hilfsstoffe sind Puffersubstanzen, z.B. Natriumhydrogencarbonat, Natriumpyrophosphat oder Natriumacetat, die in Mengen von bis zu 2 Gew.-% eingesetzt werden können. Auch Beschleuniger wie Formaldehydsulfoxylat können eingesetzt werden. Weiterhin können übliche, bei der Emulsionspolymerisation verwendete Molekulargewichtsregler, z.B. Butenol oder auch organische Thioverbindungen wie Mercaptoethanol, Thioglycolsäure, Octylmercaptan oder tert.-Dodecylmercaptan verwendet werden. Für die Durchführung der Polymerisationsverfahren kommen verschiedene, üblicherweise bei der Emulsionspolymerisation angewandte Methoden in Betracht, z.B. eine Gesamtvorlage aller Reaktanden, ein Monomerenzulauf oder ein Emulsionszulauf. Im allgemeinen wird dazu die Temperatur des Polymerisationsmediums in einem Bereich von 40 bis 100, insbesondere 50 bis 90°C, gehalten. Als pH-Wert wird zweckmäßigerweise ein Bereich zwischen 3 und 9 eingehalten, jedoch ist mit den erfindungsgemäßen Verbindungen auch eine Emulsionspolymerisation bei niedrigeren pH-Werten möglich. Die vorgenannten möglichen Verfahrensvarianten zur Emulsionspolymerisation werden zweckmäßigerweise in kühl- und heizbaren, mit Rührer und Temperaturmeßeinrichtung versehenen Behältern, z.B. in Rührdruckkesseln, durchgeführt. Ebenfalls möglich ist die Verwendung von Rohrschlangenreaktoren oder so genannten Loop-Reaktoren. Nach Beendigung der Polymerisation wird die Polymerisatdispersion zweckmäßigerweise abgekühlt und über Siebeinrichtungen aus dem Reaktor entfernt. Falls die Reaktionsprodukte als Festprodukte isoliert werden sollten, wird die Polymerisatdispersion zweckmäßigerweise ausgefällt oder sprühgetrocknet. Bevorzugt ist jedoch eine direkte Verwendung der bei der Polymerisation erhaltenen Dispersionen als Bindemittel für Farben, Klebstoffe, Papierstreichmassen und andere Beschichtungsmittel. Weitere Bedingungen für Verfahren zur Emulsionspolymerisation unter Verwendung der erfindungsgemäß einzusetzenden Verbindungen (I) und (II) können von dem Fachmann in üblicher Weise an die jeweiligen Erfordernisse angepasst oder frei gewählt werden.

### Beispiele

### Eingesetzte Emulgatoren

### C12-Maleinat:

Hierbei handelt es sich um eine Substanz gemäß den Formeln (I) und (II) der vorliegenden Erfindung. Diese wurde wie folgt hergestellt:
98 g (1 mol) Maleinsäureanhydrid wurde in einem Kolben aufgeschmolzen und mit 4,4 g Natriumcarbonat versetzt. Bei 90°C wurden unter Rühren sowie unter Durchleiten von Stickstoff 618,18 g (1 mol) 1,2-Dihydroxydodecan-10EO (Anlagerungsprodukt von 10 mol Ethylenoxid an 1 mol 1,2-Dihydroxydodecan) zugegeben. Die Veresterungsreaktion wurde mittels Säurezahlkontrolle verfolgt. Nach Abschluss der Reaktion wurde das Produkt mittels wässriger Natronlauge neutralisiert und auf einen Feststoffgehalt von 30% eingestellt.

### SUS 87:

Hierbei handelt es sich um ein handelsübliches "Disponil SUS 87", erhältlich von der Fa. Cognis.

### Verwendete Testmethoden

Die hergestellten Emulsionen wurden anhand folgender Parameter charakterisiert:

Der **Trockenrückstand** wurde wie folgt bestimmt: 5 Gramm der Emulsion wurden in einen Trockenrückstandsapparat vom Typ 709301 der Fa. Satorius gefüllt und bis zur Gewichtskonstanz getrocknet. Das Ergebnis wird in Gewichtsprozent Trockenrückstand angegeben. In diesem Sinne sind die Angaben in den nachfolgenden Tabellen zu verstehen.

Die **Viskosität** der hergestellten Emulsionen wurde nach Brookfield bei 20 upm und Einsatz von Spindel 1 bestimmt, wobei die Emulsionen als solche eingesetzt wurden. Die Angaben der Viskosität in den nachfolgenden Tabellen erfolgt in der Einheit mPas.

Der **pH-Wert** der hergestellten Emulsionen wurde gemäß DIN 19268 elektrochemisch unter Verwendung einer pH-Elektrode bestimmt.

Der **mittlere Teilchendurchmesser** der hergestellten Emulsionen wurde mittels eines Coulter Nano-Sizers bestimmt. Die Angaben des Teilchendurchmessers in den nachfolgenden Tabellen erfolgt in der Einheit nm (Nanometer).

Der **Gesamt-Koagulat-Gehalt** der hergestellten Emulsionen wurde gravimetrisch nach Abfiltrieren über ein 80 Mikrometer-Filter (Naßkoagulat) bestimmt.
Der derart ermittelte Koagulatgehalt wird als % Koagulat bezogen auf den Feststoffgehalt der Emulsion angegeben. Unter dem Feststoffgehalt der Emulsion ist dabei die eingesetzte Menge der Monomeren zu verstehen.
Der Koagulatgehalt ist für den Fachmann eine wichtige Größe zur Beurteilung der Güte einer durch Emulsionspolymerisation hergestellten Emulsion.

Die **Elektrolytstabilität** der hergestellten Emulsionen wurde bestimmt, indem Proben dieser Emulsion (10 g) mit je 10 ml von 6 verschiedenen Elektrolytlösungen versetzt und auf Koagulatbildung überprüft wurden. Als Elektrolytlösungen wurden Lösungen von jeweils 1 und 10% NaCl, CaCl₂ und AlCl₃ eingesetzt. Angegeben wurde die stärkste Elektrolytlösung, die noch nicht zur Koagulatbildung führt.

Die **Alkaliresistenz** wurde bestimmt, indem aus der Emulsion ein getrockneter Polymerfilm hergestellt und dieser in einer wässrigen NaOH-Lösung (4%) gelagert wurde. Nach 24 und 48 Stunden wurde der Film im Hinblick auf Weißanlaufen optisch beurteilt und gemäß einer Skala von 0 (keine Veränderung) bis 5 (komplette Weißtrübung) eingestuft.

### Herstellung von Latices

### Beispiel 1 (erfindungsgemäß)

In ein Reaktorgefäß wurden 377,20 g destilliertes Wasser, 1,24 g Natriumacetat, 0,12 g Ammonium-eisensulfat-hexahydrat, 8,43 g Natriumethensulfonat und 0,19 g Natriumdisulfit zusammengegeben. Das Reaktionsgemisch wurde mit Stickstoff gespült, auf 55°C aufgeheizt und mit einer Initiatorlösung 1 aus 1,01 g Natriumpersulfat und 12,14 g destilliertem Wasser versetzt. Anschließend wurden innerhalb von 3 Stunden separat ein Monomerengemisch aus 379,28 g Vinylacetat und 126,43 g VeoVa 10 und eine Emulgatorlösung aus 10,11 g C12-Maleinat in 62,71 g destilliertem Wasser zudosiert. Anschließend wurde die Temperatur auf 85°C erhöht, eine Initiatorlösung 2 aus 0,51 Natriumpersulfat in 12,14 g destilliertem Wasser zugegeben und 1 Stunde lang nachpolymerisiert. Nach beendeter Reaktion wurde die so erhaltene Latex filtriert, mit Ammoniumhydroxid-Lösung neutralisiert und auf einen pH-Wert von 7 bis 8 eingestellt.

### Beispiel 2 (zum Vergleich)

Wie Beispiel 1, wobei jedoch anstelle des C12-Maleinats dieselbe Menge SUS 87 eingesetzt wurde.

### Testergebnisse

Die hergestellten Latices wurden näher charakterisiert. Die Ergebnisse sind Tabelle 1 zu entnehmen.

**Tabelle 1**

| | Lastex nach Bsp. 1 | Latex nach Bsp. 2 |
|---|---|---|
| Teilchengröße [nm] | 330 | 273 |
| Viskosität (20°C) [mPas] | 770 | 1210 |
| Elektrolytstabilität | 1% CaCl₂ | 1% CaCl₂ |
| Alkaliresistenz nach 24 h | 3 | 0 |
| Alkaliresistenz nach 48 h | 3 | 0 |

### Bestimmung der Gefrier-Tau-Stabilität

### Beispiel 3 (erfindungsgemäß)

Die erfindungsgemäße Emulsion gemäß Beispiel 1 wurde von 23°C ausgehend innerhalb von 16 Stunden auf -5°C abgekühlt und nach Erreichen dieser Temperatur innerhalb von 8 Stunden wieder auf 23°C erwärmt. Hiernach wurde die Emulsion visuell auf Homogenität geprüft. Dieser Zyklus wurde insgesamt fünfmal durchlaufen, wobei die Minimaltemperatur bei jedem Zyklus um weiter 5°C abgesenkt wird, d.h. beim zweiten Zyklus wurde bis auf -10°C abgekühlt, beim dritten Zyklus bis auf -15°C, usw. Die erfindungsgemäße Emulsion nach Beispiel 1 war nach fünf Zyklen immer noch homogen, d.h. sie lag als intakte Emulsion vor.

### Beispiel 4 (zum Vergleich)

Das Verfahren nach Beispiel 3 wurde auf die Vergleichslatex gemäß Beispiel 2 angewandt. Hier zeigte sich, dass die Emulsion bereits nach dem ersten Zyklus eine Phasentrennung zeigte. Das aufgetretene Koagulat war nicht redispergierbar.

## Patentansprüche

1. Verwendung von Maleinsäure-Estern, die ausgewählt sind aus Verbindungen der allgemeinen Formeln (I) und (II), worin bedeuten:
• A einen Alkylrest mit 10 bis 20 C-Atomen,
• X und Z unabhängig voneinander Wasserstoff- oder einen Methylrest,
• M Wasserstoff, ein Alkall- oder Erdalkalimetall, -NH₃ oder eine Amingruppe,
• n und p unabhängig voneinander eine Zahl Im Bereich von 3 bis 10, 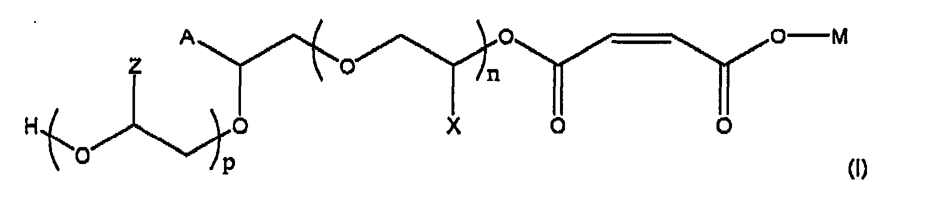 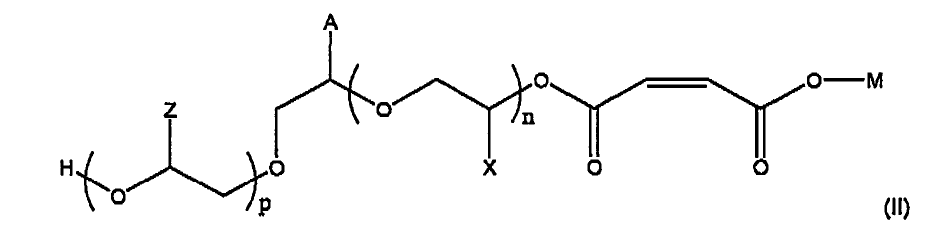 als copolymerisierbare Emulgatoren in der Emulsionspolymerliation olefinisch ungesättigter Monomerer.

2. Verwendung gemäß Anspruch 1, wobei A ein Alkylrest mit 12 bis 18 C-Atomen ist.

3. Verfahren zur Herstellung von Polymeren durch Emulsionspolymerisation olefinisch ungesättigter Monomere, bei dem man als copolymeriserbare Emulgatoren die MaleinsäureEster (I) und (II) gemäß Anspruch 1 oder 2 einsetzt.

## Claims

1. Use of maleic esters selected from compounds of the general formulae (I) and (II) in which:
• A is an alkyl radical having 10 to 20 carbon atoms,
• X and Z are each independently hydrogen or a methyl radical,
• M is hydrogen, an alkali metal or alkaline earth metal, -NH₂ or an amine group,
• n and p are each independently a number in the range from 3 to 10, 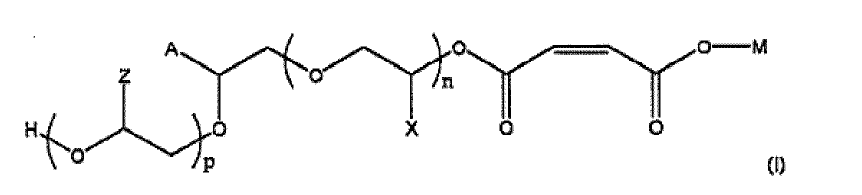 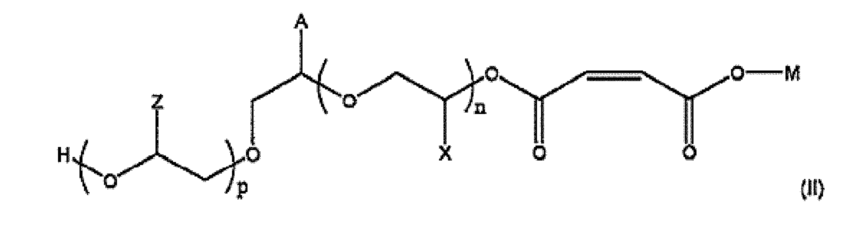 as copolymerizable emulsifiers in the emulsion polymerization of olefinically unsaturated monomers.

2. Use according to Claim 1, where A is an alkyl radical having 12 to 18 carbon atoms.

3. Process for preparing polymers by emulsion polymerization of olefinically unsaturated monomers, in which the copolymerizable emulsifiers used are the maleic esters (I) and (II) according to Claim 1 or 2.

## Revendications

1. Utilisation d'esters de l'acide maléique, qui sont choisis parmi les composés de formules générales (I) et (II), dans lesquelles :
- A signifie un radical alkyle de 10 à 20 atomes C,
- X et Z signifient indépendamment l'un de l'autre un radical hydrogène ou méthyle,
- M signifie l'hydrogène, un métal alcalin ou alcalino-terreux, -NH₂ ou un groupe amine,
- n et p signifient indépendamment l'un de l'autre un nombre dans la plage allant de 3 à 10, 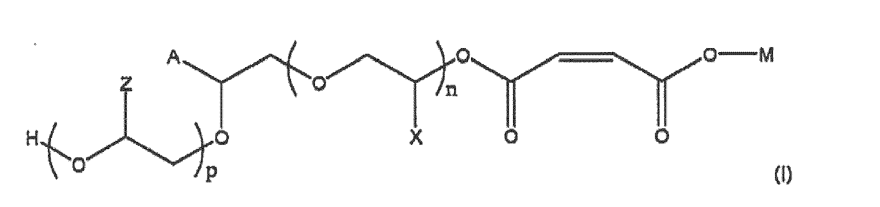 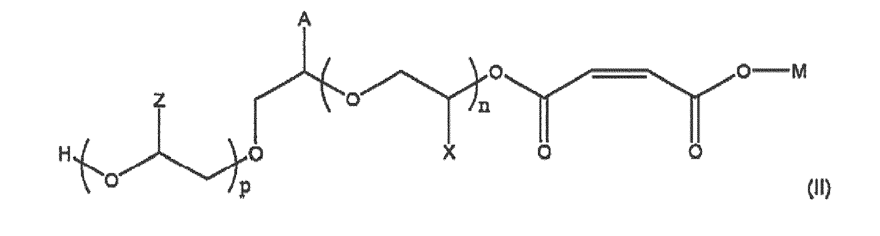 en tant qu'émulsifiants copolymérisables dans la polymérisation en émulsion de monomères oléfiniquement insaturés.

2. Utilisation selon la revendication 1, dans laquelle A est un radical alkyle de 12 à 18 atomes C.

3. Procédé de fabrication de polymères par polymérisation en émulsion de monomères oléfiniquement insaturés, selon lequel les esters de l'acide maléique (I) et (II) selon la revendication 1 ou 2 sont utilisés en tant qu'émulsifiants copolymérisables.
